# FASCICULE DE BREVET EUROPEEN

(11) **EP 1 401 706 B1**
(45) Date de publication et mention de la délivrance du brevet: **20.10.2004**
(21) Numéro de dépôt: 02745502.1
(22) Date de dépôt: 07.06.2002
(51) Int. Cl.: B64C 13/50, H01L 41/09, H02N 2/00

(54) **ACTIONNEUR DE COMMANDE DE VOL PRIMAIRE A MOTEUR A VIBRATION**
STELLGLIED FÜR PRIMÄRE FLUGSTEUERUNG MIT VIBRATIONSMOTOR
VIBRATION MOTOR PRIMARY FLIGHT CONTROL ACTUATOR

(30) Priorité: 07.06.2001 FR 0107436
(43) Date de publication de la demande: 31.03.2004
(73) Titulaire: SAGEM S.A., 75015 Paris (FR)
(72) Inventeur: AUDREN, Jean, Thierry, F-78470 St Remy Les Chevreuse (FR)
(74) Mandataire: Callon de Lamarck, Jean-Robert
(86) Numéro de dépôt international: PCT/FR2002/001960
(87) Numéro de publication internationale: WO 2002/098735

(56) Documents cités:
- EP-A- 0 921 070
- EP-A- 0 980 102
- DUPONT J: "Des commandes de vol piézo-électriques" AIR AND COSMOS, AVIATION MAGAZINE INTERNATIONAL, PARIS, FR, no. 1602, 28 février 1997 (1997-02-28), pages 20-21, XP002074597 ISSN: 1240-3113
- LAPERROUSAZ P: "Actionneurs: Des materiaux piézo-électriques pour les commandes du futur" USINE NOUVELLE MENSUEL, PARIS, FR, vol. 2568, 31 octobre 1996 (1996-10-31), pages 52-53, XP002074596

## Description

### Présentation générale.

La présente invention est relative aux actionneurs d'aéronefs pour commande de vol primaire.

Les commandes de puissance des gouvernes des avions de transport sont habituellement hydrauliques. Les avionneurs recherchent des solutions pour remplacer cette technologie d'une part pour des raisons de sécurité et santé (risque de feu associé aux liquides hydrauliques ; toxicité des liquides hydrauliques ; agressivité chimique des liquides hydrauliques ; pollution) et d'autre part pour des raisons économiques (réduction de la maintenance).

Toutefois, les solutions proposées ne doivent conduire ni à des équipements plus lourds ni à des équipements consommateurs d'énergie, qui augmenteraient les coûts d'exploitation.

Les moteurs piezoélectriques font partie des solutions envisagées par les avionneurs pour remplacer les commandes hydrauliques.

### Etat de la technique.

Les moteurs piezoélectriques à vibration tels que décrits dans les brevets EP 907 213, EP 980 102, et dans la demande de brevet FR 00 03084 permettent d'atteindre des puissances mécaniques de plusieurs kilowatts compatibles avec ce qui est nécessaire pour la commande d'une gouverne d'un avion de transport.

Leurs avantages sont qu'ils ont :
- un rapport puissance délivrée/masse important ;
- une vitesse de sortie faible associée à un couple élevé ; et
- une très faible inertie du rotor.

Le premier avantage est important pour la rentabilité de l'avion. Toute perte de masse de la structure ou des équipements est compensable par une augmentation de la charge payante transportée, toutes choses étant égales par ailleurs.

Le second avantage permet de limiter ou de rendre nul le nombre des mécanismes réducteurs de vitesse compliqués. Ceux-ci sont nécessaires si l'on utilise des moteurs électriques classiques (électromagnétiques). Ces derniers, à puissance équivalente, présentent une grande vitesse et un faible couple. La limitation du nombre de mécanismes réducteurs permet encore d'ajouter au premier avantage.

Le troisième avantage permet de minimiser l'énergie cinétique accumulée dans le moteur. Par conséquent, on minimise la consommation d'énergie lorsque la gouverne est commandée en permanence pour réaliser les petits mouvements nécessaires à la stabilisation et au pilotage fin de l'avion. La minimisation de l'énergie cinétique provient également du faible rapport de réduction faisant partie du deuxième avantage.

Dans la demande de brevet EP 921 070, un actionneur de gouverne comportant un tel moteur à vibrations est décrit.

### Inconvénients.

Néanmoins, les moteurs piezoélectriques à vibration présentent certains inconvénients par rapport aux actionneurs hydrauliques actuels ou par rapport aux actionneurs électromagnétiques qui pourraient être utilisés :
- ils sont généralement bloqués en l'absence d'alimentation électrique ;
- ils ont une durée de fonctionnement de quelques milliers d'heures lorsqu'ils sont utilisés à pleine puissance. On rappelle que la durée d'utilisation d'un avion est de plusieurs dizaines de milliers d'heures de vol ;
- la durée d'obtention continue d'une puissance élevée reste limitée à quelques minutes compte tenu de l'échauffement associé.

### PRESENTATION DE L'INVENTION.

L'invention a pour but de pallier ces inconvénients, notamment elle propose une structure d'actionneur apte à utiliser des moteurs à vibration piezoélectriques.

A cet effet, l'invention propose un actionneur d'une gouverne, notamment pour commande de vol primaire d'un aéronef, comportant, dans une chaîne de commande principale, un actionneur principal de la gouverne, caractérisé en ce que l'actionneur de la chaîne de commande principale comporte un moteur du type moteur à vibration, et en ce qu'il comporte en outre, dans une chaîne de commande secondaire de compensation, un actionneur de compensation et des moyens formant ressort interposés entre l'actionneur de compensation et la gouverne, cet actionneur de compensation tendant ou comprimant les moyens formant ressort afin qu'ils soient aptes à fournir à la gouverne un effort moyen pour décharger l'actionneur principal de l'effort moyen qu'il doit fournir à la gouverne.

L'invention est avantageusement complétée par les caractéristiques suivantes, prises seules ou en une quelconque de leur combinaison techniquement possible :
- l'actionneur de la chaîne secondaire de compensation comporte un moteur du type moteur à vibration ;
- l'actionneur de compensation tend ou comprime les moyens formant ressort lorsque l'actionneur principal doit fournir un effort à valeur moyenne non nulle pendant une durée supérieure à une durée seuil ;
- la durée seuil est sensiblement comprise entre une et vingt secondes ;
- la raideur mécanique des moyens formant ressort est choisie de telle sorte que la course du ressort nécessaire à l'obtention du couple maximal de l'actionneur de compensation soit nettement plus grande que la course de la gouverne ;
- la position de l'actionneur de compensation est bloquée quand il exerce sur la gouverne l'effort moyen apte à décharger l'actionneur principal de l'effort moyen qu'il doit fournir à la gouverne, l'actionneur principal restant en mode de fonctionnement et n'exerçant alors sur la gouverne que des efforts pour les manoeuvres fines et de stabilisation de l'aéronef ;
- la chaîne principale comporte des moyens formant embrayage électrique s'étendant entre l'actionneur principal et la gouverne et permettant de désaccoupler la gouverne de l'actionneur principal en cas de dysfonctionnement de ce dernier ;
- la chaîne principale comporte des moyens formant amortisseur mécanique s'étendant en parallèle des moyens formant embrayage électrique ;
- les commandes pour le positionnement de la gouverne sont déterminées par un calculateur de pilotage et transmises aux actionneurs principal et de compensation par l'intermédiaire de moyens électroniques de commande ;
- la commande pour le positionnement de la gouverne est transmise à l'actionneur principal, une boucle de retour s'étendant entre la chaîne de commande principale et la chaîne de commande secondaire et permettant la commande de l'actionneur de compensation par l'intermédiaire de moyens formant filtre passe-bas s'étendant dans la chaîne secondaire et de moyens électroniques de commande interposés entre les moyens formant filtre passe-bas et l'actionneur de compensation ;
- la boucle de retour s'étend entre d'une part un capteur d'effort interposé entre l'actionneur principal et la gouverne et d'autre part les moyens formant filtre passe-bas ;
- la boucle de retour s'étend entre d'une part un circuit d'analyse des signaux de commande du moteur à vibrations de l'actionneur principal, ces signaux de commande étant représentatifs du couple fourni par l'actionneur principal, et d'autre part les moyens formant filtre passe-bas, ledit circuit d'analyse s'étendant sur les moyens électroniques de commande de la chaîne de commande principale ;
- il comporte des moyens qui détectent des manoeuvres de la gouverne de grande amplitude et qui commandent alors des moyens aptes à couper la boucle de retour s'étendant entre la chaîne de commande principale et la chaîne de commande secondaire en entrée de la fonction de transfert et à couper la ligne de commande secondaire en sortie de la fonction de transfert.

### PRESENTATION DES FIGURES.

- la figure 1 représente un premier mode de réalisation d'un actionneur selon l'invention ;
- la figure 2 représente l'évolution du couple fourni par les différents actionneurs pour contrer le couple dû à la traînée aérodynamique ;
- la figure 3 représente un autre mode de réalisation possible comportant en embrayage et un dispositif d'amortissement dans la chaîne principale ;
- la figure 4 représente un dispositif de commande en boucle ouverte d'un actionneur selon l'invention ;
- la figure 5 représente un dispositif de commande en boucle fermée d'un actionneur selon l'invention, avec un capteur d'effort ;
- la figure 6 représente un dispositif de commande en boucle fermée d'un actionneur selon l'invention, sans capteur d'effort ; et
- la figure 7 représente un dispositif de commande en boucle fermée d'un actionneur selon l'invention comportant un dispositif de désaccouplement de la boucle fermée.

### DESCRIPTION DE L'INVENTION.

On rappelle que les gouvernes primaires sont les gouvernes principales de manoeuvres d'un aéronef.

### Angle de commande.

En vol, les gouvernes primaires sont la plupart du temps dans une position voisine de la position nulle, qui correspond au minimum de traînée aérodynamique. Elles sont commandées pour de petits mouvements à des fréquences pouvant aller jusqu'à quelques Hz pour la stabilisation fine de l'avion.

Pour des manoeuvres particulières (mise en roulis pour virage, piqué ou cabré pour changement d'altitude, décollage ou atterrissage) de grandes amplitudes de mouvements des gouvernes sont requises. Les gouvernes sont alors commandées pendant des temps assez courts - quelques secondes à quelques dizaines de secondes.

Des petits mouvements nécessaires à la stabilisation de l'avion s'ajoutent à ces grands mouvements destinés à modifier la trajectoire.

### Couple.

L'actionneur de la gouverne doit contrer un couple résistant aérodynamique qui a une double origine :
- Un couple qui est fonction de l'angle de braquage de la gouverne et qui tend à la ramener vers sa position d'équilibre (rappel aérodynamique).
- Un couple constant qui dépend de la vitesse de l'avion et qui est la résultante du moment des forces de portance par rapport à la charnière de la gouverne.
   Ce couple peut être positif ou négatif selon le signe de la portance à l'endroit où se trouve la gouverne. La gouverne peut par exemple se situer dans le plan principal ou dans le plan fixe arrière. Ce couple peut même être nul dans le cas d'une gouverne de direction qui est parfaitement symétrique.

On indique que Γₘₐₓ est le couple maximal dont est capable l'actionneur pour contrer à vitesse angulaire nulle le couple aérodynamique de la gouverne.
Si on appelle ωₙ la vitesse angulaire désirée pour le déplacement de la gouverne sous le couple Γₘₐₓ / 2 ;
- la vitesse angulaire désirée pour les petits mouvements vaut sensiblement ωₙ / 2. La variation de couple pour ces petits mouvements vaut Γₘₐₓ / 10 ;
- le couple constant résistant à contrer peut avoir des valeurs, allant de Γₘₐₓ / 5 à Γₘₐₓ / 2.5.
- la puissance mécanique nécessaire à un grand déplacement d'une gouverne vaut Pₘₐₓ= ωₙ x Γₘₐₓ / 2.
- la puissance mécanique nécessaire aux petits déplacements d'une gouverne vaut au maximum Pₘₐₓ= ωₙ/2 x (Γₘₐₓ / 10 + Γₘₐₓ / 2.5). La partie Γₘₐₓ / 10 correspond au couple fourni pour les petits mouvements de la gouverne, la partie Γₘₐₓ / 2.5 correspond au couple constant à fournir pour garder la position moyenne de la gouverne. On comprend donc que si la partie Γₘₐₓ / 2.5 disparaît ou est diminuée, alors la puissance dissipée diminue de beaucoup.

### Principe général de l'invention.

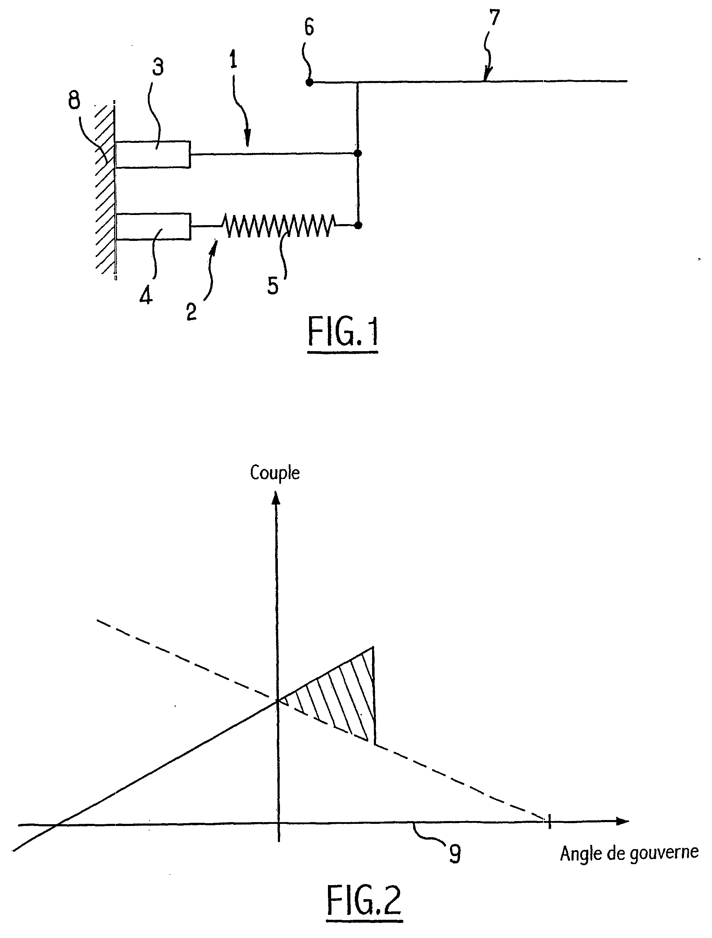

L'architecture d'actionneur selon l'invention est représentée à la figure 1.

Deux chaînes d'actionnement 1 et 2 sont fixées sur la structure 8 de l'avion. La chaîne 1 est appelée chaîne principale, la chaîne 2 est appelée chaîne secondaire.

La chaîne d'actionnement principale 1 et la chaîne d'actionnement secondaire 2 comportent des actionneurs linéaires 3 et 4. L'actionneur 3 est accouplé directement à une gouverne 7.

L'actionneur 3 est apte à imprimer à la gouverne 7 tous les mouvements désirés.

L'actionneur 3 est accouplé à la gouverne 7 par l'intermédiaire de moyens 5 formant ressort. Ces moyens 5 sont aptes à compenser le couple constant résistant de la gouverne 7.

Le mouvement linéaire des actionneurs 3 et 4 est transformé en un mouvement rotatif de la gouverne 7 autour de son axe 6 - comme il est souvent fait sur les avions. Cependant, on peut réaliser un dispositif purement rotatif ou une combinaison des deux types de mouvement.

Le fonctionnement du dispositif est le suivant :
- Lorsque l'aéronef doit effectuer une manoeuvre, le manche commandé par le pilote ou les calculateurs de pilotage en donnent la consigne à l'actionneur principal 3.
- Si l'effort à maintenir sur la gouverne n'a pas une valeur moyenne nulle sur un temps long - plus de 10 secondes par exemple -, l'actionneur de compensation 4 est mis en fonctionnement. Ainsi, on décharge l'effort que doit fournir l'actionneur principal 3. A cet effet, l'actionneur de compensation 4 bande les moyens 5 formant ressort jusqu'à ce que l'effort attendu sur la gouverne 7 soit obtenu.

La raideur mécanique des moyens 5 formant ressort est choisie de telle sorte que la course du ressort nécessaire à l'obtention du couple maximal de l'actionneur 4 soit nettement plus grande que la course de la gouverne 7. Avec cette condition, le couple de rappel induit par le ressort varie très peu lorsque l'actionneur de compensation 4 est arrêté. L'actionneur principal 3 permet donc les petits mouvements de la gouverne 7 et le réglage fin du pilotage de l'avion. L'actionneur principal 3 n'a plus à fournir un effort dynamique à valeur moyenne importante. L'actionneur de compensation 4 est en position bloquée, et fournit par l'intermédiaire des moyens ressort 5 la valeur moyenne de l'effort de la gouverne 7. La fonction de compensation est ainsi respectée.
La figure 2 montre l'évolution des couples fournis par l'actionneur principal 3 et par l'actionneur de compensation 4 en fonction de l'angle de la gouverne. Le trait plein montre que le couple résistant de la gouverne 7 augmente avec l'angle de la gouverne. Ce phénomène est dû à l'augmentation de la traînée aérodynamique.
Le trait discontinu montre que le couple exercé par l'actionneur de compensation 4 diminue quand l'angle de la gouverne augmente. La distance 9 représente la course du ressort.
La partie hachurée représente le couple que doit fournir l'actionneur principal pour contrer le couple dû à la traînée aérodynamique.
Par ailleurs, le couple résistant de la gouverne varie avec les conditions de vol de l'avion, notamment avec la vitesse.

Les moteurs piezoélectriques sont avantageusement utilisés dans les actionneurs 4 et 5 compris dans une structure telle que celle représentée sur la figure 1 :
- l'actionneur principal 4 ne fournit que de petites puissances sauf en cas de grand braquage demandé. Sa durée de vie est donc considérablement augmentée.
- l'actionneur de compensation 5 ne fonctionne que lorsque les conditions de vol générales de l'avion varient. Lorsque les conditions de vol sont stationnaires, l'alimentation peut être coupée, le moteur reste alors bloqué et maintient le ressort comprimé ou tendu.

L'application des moteurs piezoélectriques au niveau de l'actionneur principal 4 est un des principaux avantages de l'invention. En effet, la commande des petits mouvements à fréquence élevée est nécessaire au pilotage et à la stabilité de l'aéronef. Le gain en énergie apporté par ce mécanisme piezoélectrique de faible inertie est important.
Un moteur piezoélectrique est également avantageusement utilisé dans l'actionneur de compensation 5. Cependant, on peut disposer dans la chaîne secondaire 2 un moteur électrique classique suivi d'un étage de réduction important.
L'étage de réduction peut être irréversible afin que le moteur reste immobile lorsque son alimentation est coupée. La gouverne reste alors en position, malgré le couple résistant de la gouverne 7.
Si ce n'est pas le cas, le dispositif peut être complété par un frein.

### DESCRIPTION D'UNE OU PLUSIEURS VARIANTES DU MODE DE REALISATION DE L'INVENTION.

### Structure générale des actionneurs.

Bien que les moteurs piezoélectriques fournissent leur puissance à des vitesses plus faibles que celles des moteurs électriques classiques, leur vitesse est souvent plus élevée que celle souhaitée pour la gouverne 7. Une réduction est nécessaire, elle peut prendre la forme d'engrenages rotatifs, de crémaillères ou de vis si l'on désire réaliser un mouvement linéaire.

### Première variante : débrayage de l'actionneur principal.

Pour des raisons de sécurité, la gouverne doit revenir automatiquement en position neutre en cas de coupure d'alimentation électrique.

Un actionneur utilisant un moteur piezoélectrique reste bloqué dans la position dans laquelle il était au moment de la coupure de l'alimentation électrique.

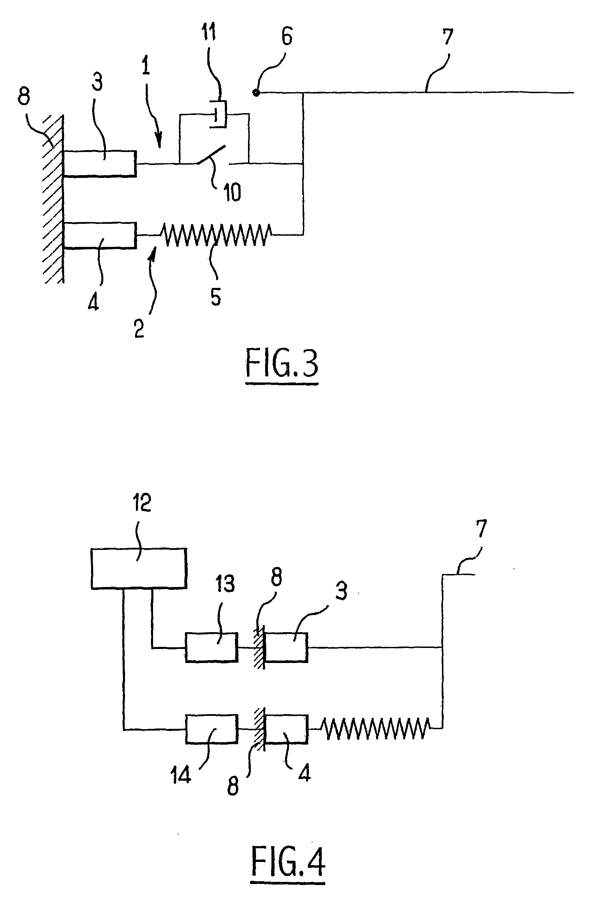

La figure 3 montre un dispositif qui comporte dans la chaîne cinétique 1 un embrayage électrique 10 qui désaccouple la gouverne 7 dès que la tension d'alimentation du moteur de l'actionneur 3 disparaît. Ainsi, la gouverne peut revenir dans la position neutre.

Les moyens 10 sont connus en soit de l'homme de métier et ne sont pas décrits en détail dans la suite.

### Deuxième variante : amortissement de l'actionneur principal.

Préférentiellement, le mouvement de la gouverne, lorsqu'elle devient ainsi libre, est amorti. L'amortissement peut être réalisé à l'aide de du système d'embrayage. Il est apte à présenter un frottement résiduel non négligeable en position débrayée.

Un amortisseur 11 peut également s'étendre entre l'entrée et la sortie de l'embrayage 10 comme le montre la figure 3.

Le ou les deux éléments supplémentaires 10 et 11 peuvent être linéaires ou rotatifs. Ils peuvent être placés à toute position dans la chaîne cinétique entre la sortie du moteur et la gouverne 7.

### DESCRIPTION D'UN OU PLUSIEURS MODES DE GESTION DES COMMANDES DES DEUX ACTIONNEURS.

Il existe plusieurs méthodes de commande de cet actionneur double, sans être exhaustif on peut citer :
- boucle ouverte ;
- boucle fermée avec capteur d'effort ;
- boucle fermée sans capteur d'effort.

On peut croiser toutes ces catégories de commandes avec le fait que l'un ou l'autre des deux actionneurs est doté ou non de capteurs de déplacement angulaire ou linéaire.

### Premier mode de réalisation possible : commande en boucle ouverte.

La figure 4 représente la structure d'un actionneur selon l'invention dont la commande des actionneurs 3 et 4 est effectuée en boucle ouverte.

Dans ce cas, un calculateur de l'avion 12 détermine lui-même la commande de compensation qu'il doit appliquer en fonction des conditions de vol générales qu'il peut apprécier lui-même grâce à des capteurs et/ou grâce à l'ensemble des commandes qu'il doit appliquer à l'ensemble des actionneurs de l'avion.

Les instructions du calculateur 12 de l'avion sont envoyées à des électroniques de commande 13 et 14 correspondant aux actionneurs 3 et 4 respectivement.

### Première variante : commande en boucle fermée avec capteur d'effort.

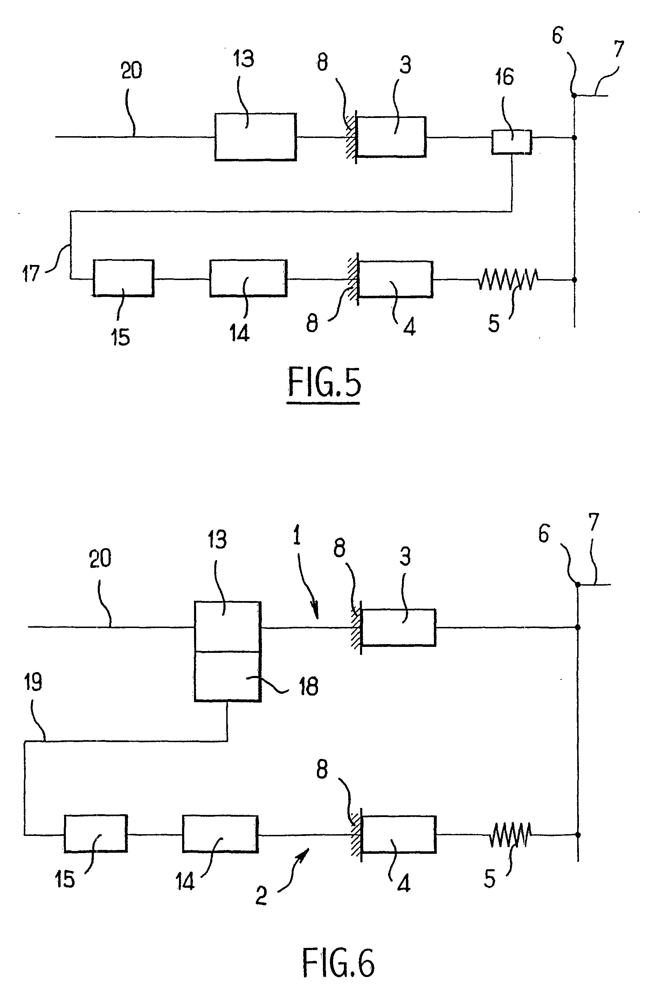

Dans la structure représentée à la figure 5, un capteur d'effort 16 mesure le couple ou la force appliqués par l'actionneur principal 3. Le signal 17 est traité à l'aide d'un bloc de commande électronique 15 ayant une fonction de transfert linéaire ou non, du type passe-bas.

La sortie du bloc 15 est branchée à une électronique de commande 14. Le bloc électronique 15 comporte des moyens de pilotage des éléments piezoélectriques pouvant comporter une électronique analogique et/ou électronique numérique elle-même comportant un processeur de traitement de signal et du logiciel, un circuit programmable ou tout autre moyen pilote. Ces moyens de pilotage sont aptes à piloter l'électronique de commande 14 de l'actionneur de compensation 4 jusqu'à ce que le signal du capteur d'effort présente une moyenne nulle.

### Deuxième variante : commande en boucle fermée sans capteur d'effort.

Dans la structure représentée à la figure 6, une électronique de commande de l'actionneur principal 13 permet d'évaluer, notamment en surveillant la consommation des circuits qu'elle comporte, l'effort développé par l'actionneur principal 3. La surveillance de la consommation des circuits est assurée par un bloc 18. Le signal 19 en sortie du bloc 18 est envoyé sur un bloc 15 qui a une fonction de transfert linéaire ou non, du type passe-bas.

Dans les deux derniers cas utilisant une boucle fermée, la commande 20 fournie par le système de pilotage est la commande totale désirée. Il n'est pas besoin de la séparer en deux à l'aide d'autres informations ou traitements. La boucle fermée permet de rectifier la position de l'actionneur 4 pour obtenir au niveau de la gouverne 7 un minimum d'effort appliqué par l'actionneur 3.

La fonction de transfert du bloc 15 est un réseau correcteur. La fréquence de coupure de la boucle de compensation 2 ainsi formée est choisie suffisamment basse pour filtrer tous les petits mouvements de gouverne. Cependant, elle est choisie suffisamment haute pour pouvoir suivre les évolutions générales de la configuration de vol de l'avion, notamment sa vitesse. Une valeur de quelques centièmes de Hz semble adéquate.

L'efficacité de la fonction de transfert 15 peut être avantageusement augmentée par l'introduction de seuils. Lorsque l'estimation du couple moyen appliqué par l'actionneur principal 3 passe en dessous de ces seuils en valeur absolue, on ne recherche pas une meilleure compensation et on arrête la commande de l'actionneur de compensation 4. En effet, du fait de la course importante demandée à l'actionneur de compensation 4 (raideur faible du ressort), la recherche d'une compensation parfaite risque d'entraîner dans l'actionneur de compensation 4 une consommation d'énergie plus élevée que celle que l'on pourra gagner au niveau de l'actionneur principal 3 grâce à une compensation parfaite.

### Troisième variante.

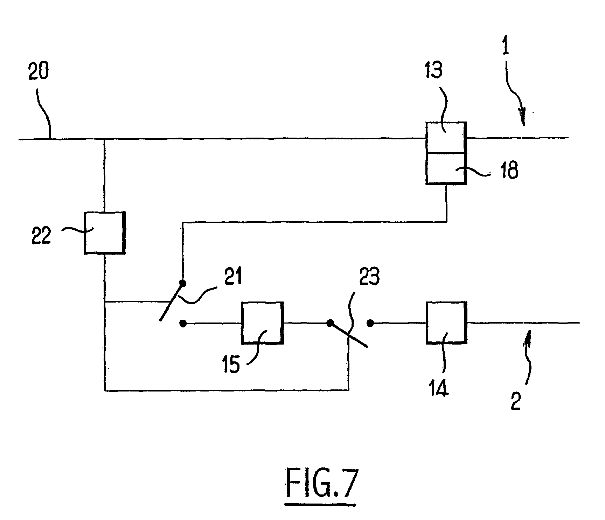

Comme le montre la structure de la figure 7, pour ne pas perturber l'estimation du couple moyen lors de braquages importants de la gouverne 7 - ceux-ci sont détectés par des moyens 22 -, on interrompt le fonctionnement de la fonction de transfert 15 tant en entrée par un interrupteur 21qu'en sortie par un interrupteur 23.

L'invention s'applique avantageusement aux actionneurs de gouvernes d'aéronefs, mais également à tout système dont la charge est composée de deux parties : une partie effort quasi constant correspondant à une position moyenne et une partie effort variable autour de cet effort quasi constant correspondant aux petits mouvements commandés.

## Revendications

1. Actionneur d'une gouverne (7), notamment pour commande de vol primaire d'un aéronef, comportant, dans une chaîne de commande principale (1), un actionneur principal (3) de la gouverne (7),
comportant un moteur du type moteur à vibration; et **caracterisé en ce qu'**il comporte en outre, dans une chaîne de commande secondaire de compensation (2), un actionneur de compensation (4) et des moyens formant ressort (5) interposés entre l'actionneur de compensation (4) et la gouverne (7), cet actionneur de compensation (4) tendant ou comprimant les moyens formant ressort afin qu'ils soient aptes à fournir à la gouverne (7) un effort moyen pour décharger l'actionneur principal (3) de l'effort moyen qu'il doit fournir à la gouverne (7).

2. Actionneur selon la revendication 1, **caractérisé en ce que** l'actionneur (4) de la chaîne secondaire de compensation (2) comporte un deuxième moteur du type moteur à vibration.

3. Actionneur selon la revendication 1, **caractérisé en ce que** l'actionneur de compensation (4) tend ou comprime les moyens (5) formant ressort lorsque l'actionneur principal doit fournir un effort à valeur moyenne non nulle pendant une durée supérieure à une durée seuil.

4. Actionneur selon la revendication 3, **caractérisé en ce que** la durée seuil est sensiblement comprise entre une et vingt secondes.

5. Actionneur selon la revendication 1, **caractérisé en ce que** la raideur mécanique des moyens formant ressort est choisie de telle sorte que la course du ressort nécessaire à l'obtention du couple maximal de l'actionneur de compensation (4) soit nettement plus grande que la course de la gouverne (7).

6. Actionneur selon l'une des revendications précédentes, **caractérisé en ce que** la position de l'actionneur de compensation (4) est bloquée quand il exerce sur la gouverne (7) l'effort moyen apte à décharger l'actionneur principal de l'effort moyen qu'il doit fournir à la gouverne (7), l'actionneur principal (3) restant en mode de fonctionnement et n'exerçant alors sur la gouverne (7) que des efforts pour les manoeuvres fines et de stabilisation de l'aéronef.

7. Actionneur selon la revendication 1, **caractérisé en ce que** la chaîne de commande principale comporte des moyens formant embrayage électrique (10) s'étendant entre l'actionneur principal et la gouverne et permettant de désaccoupler la gouverne (7) de l'actionneur principal (3) en cas de dysfonctionnement de ce dernier.

8. Actionneur selon la revendication 7, **caractérisé en ce que** la chaîne principale comporte des moyens (11) formant amortisseur mécanique s'étendant en parallèle des moyens formant embrayage électrique.

9. Actionneur selon la revendication 1, **caractérisé en ce que** les commandes pour le positionnement de la gouverne (7) sont déterminées par un calculateur de pilotage (12) et transmises aux actionneurs principal (3) et de compensation (4) par l'intermédiaire de moyens (13, 14) électroniques de commande.

10. Actionneur selon la revendication 1, **caractérisé en ce que** la commande pour le positionnement de la gouverne (7) est transmise à l'actionneur principal (3), une boucle de retour (17, 19) s'étendant entre la chaîne de commande principale (1) et la chaîne de commande secondaire (2) et permettant la commande de l'actionneur de compensation (4) par l'intermédiaire de moyens (15) formant filtre passe-bas s'étendant dans la chaîne secondaire et de moyens électroniques de commande (14) interposés entre les moyens formant filtre passe-bas (15) et l'actionneur de compensation (4).

11. Actionneur selon la revendication 10, **caractérisé en ce que** la boucle de retour (17, 19) s'étend entre d'une part un capteur d'effort (16) interposé entre l'actionneur principal (3) et la gouverne (7) et d'autre part les moyens (15) formant filtre passe-bas.

12. Actionneur selon la revendication 10, **caractérisé en ce que** la boucle de retour (17, 19) s'étend entre d'une part un circuit (18) d'analyse des signaux de commande du moteur à vibration de l'actionneur principal (3), ces signaux de commande étant représentatifs du couple fourni par l'actionneur principal au niveau de la gouverne (7), et d'autre part les moyens (15) formant filtre passe-bas, ledit circuit d'analyse s'étendant sur les moyens (13) électroniques de commande de la chaîne de commande principale (1).

13. Actionneur selon la revendication 10, **caractérisé en ce qu'**il comporte des moyens (22) qui détectent des manoeuvres de la gouverne (7) de grande amplitude et qui commandent alors des moyens (21, 23) aptes à couper la boucle de retour (17, 19) s'étendant entre la chaîne de commande principale (1) et la chaîne de commande secondaire (2) en entrée de la fonction de transfert (15) et aptes à couper la ligne de commande secondaire (2) en sortie de la fonction de transfert (15).

## Patentansprüche

1. Stellglied für eine Steuerfläche (7), insbesondere für die Primärflugsteuerung eines Flugzeugs, mit einem Hauptstellglied (3) für die Steuerfläche (7) in einem Hauptsteuerungssystem (1) sowie mit einem Motor nach Art eines Vibrationsmotors, **dadurch gekennzeichnet, dass** es außerdem in einem Kompensationsnebensteuerungssystem (2) ein Kompensationsstellglied (4) und Federungsmittel (5) zwischen dem Kompensationsstellglied (4) und der Steuerfläche (7) umfasst, wobei dieses Kompensationsstellglied (4) die Federungsmittel dehnt oder staucht, so dass sie auf die Steuerfläche (7) eine mittlere Kraft ausüben können, um das Hauptstellglied (3) um die mittlere Kraft zu entlasten, die es auf die Steuerfläche (7) ausüben muss.

2. Stellglied nach Anspruch 1, **dadurch gekennzeichnet, dass** das Stellglied (4) in dem Kompensationsnebensystem (2) einen zweiten Motor nach der Art eines Vibrationsmotors umfasst.

3. Stellglied nach Anspruch 1, **dadurch gekennzeichnet, dass** das Kompensationsstellglied (4) die Federungsmittel (5) dehnt oder staucht, wenn das Hauptstellglied eine Kraft ausüben muss, die über eine Dauer, die größer als eine Schwellendauer ist, einen Wert ungleich null hat.

4. Stellglied nach Anspruch 3, **dadurch gekennzeichnet, dass** die Schwellendauer im Wesentlichen zwischen einer und zwanzig Sekunden liegt.

5. Stellglied nach Anspruch 1, **dadurch gekennzeichnet, dass** die mechanische Steifigkeit der Federungsmittel so gewählt ist, dass der Hub der Feder, der für das Erreichen der maximalen Kraft des Kompensationsstellgliedes (4) notwendig ist, deutlich größer als der Hub der Steuerfläche (7) ist.

6. Stellglied nach einem der vorangehenden Ansprüche, **dadurch gekennzeichnet, dass** die Position des Kompensationsstellgliedes (4) arretiert wird, wenn es auf die Steuerfläche (7) eine mittlere Kraft ausübt, die ausreicht, um das Hauptstellglied um die mittlere Kraft zu entlasten, die es auf die Steuerfläche (7) ausüben muss, wobei das Hauptstellglied (3) betriebsbereit bleibt und daher auf die Steuerfläche (7) nur Kräfte für kleine Manöver und die Stabilisierung des Flugzeugs ausübt.

7. Stellglied nach Anspruch 1, **dadurch gekennzeichnet, dass** das Hauptsteuerungssystem elektrische Kupplungsmittel (10) umfasst, die sich zwischen dem Hauptstellglied und der Steuerfläche befinden und die Abkopplung der Steuerfläche (7) von dem Hauptstellglied (3) für den Fall einer Betriebsstörung des letzteren ermöglichen.

8. Stellglied nach Anspruch 7, **dadurch gekennzeichnet, dass** das Hauptsystem parallel zu den elektrischen Kupplungsmitteln mechanische Dämpfungsmittel (11) aufweist.

9. Stellglied nach Anspruch 1, **dadurch gekennzeichnet, dass** die Steuerbefehle für die Positionierung der Steuerfläche (7) durch einen Steuerungsrechner (12) erzeugt werden und über elektronische Steuermittel (13, 14) an das Hauptstellglied (3) und an das Kompensationsstellglied (4) übertragen werden.

10. Stellglied nach Anspruch 1, **dadurch gekennzeichnet, dass** der Steuerbefehl für die Positionierung der Steuerfläche (7) zu dem Hauptstellglied (3) übertragen wird, wobei ein Rückkopplungskreis (17, 19) zwischen dem Hauptsteuerungssystem (1) und dem Nebensteuerungssystem (2) vorgesehen ist und die Steuerung des Kompensationsstellgliedes (4) über Tiefpassfiltermittel (15) in dem Nebensystem und elektronische Steuermittel (14), die zwischen den Tiefpassfiltermitteln (15) und dem Kompensationsstellglied (4) vorgesehen sind, ermöglicht.

11. Stellglied nach Anspruch 10, **dadurch gekennzeichnet, dass** der Rückkopplungskreis (17, 19) zwischen einem Kraftsensor (16), der zwischen dem Hauptstellglied (3) und der Steuerfläche (7) vorgesehen ist, einerseits und den Tiefpassfiltermitteln (15) andererseits vorgesehen ist.

12. Stellglied nach Anspruch 10, **dadurch gekennzeichnet, dass** der Rückkopplungskreis (17, 19) zwischen einem Analysatorschaltkreis (18) für Steuersignale für den Vibrationsmotor des Hauptstellglieds (3), wobei diese Steuersignale die Kraft wiedergeben, die von dem Hauptstellglied auf Höhe der Steuerfläche (7) erzeugt wird, einerseits und den Tiefpassfiltermitteln (15) andererseits vorgesehen ist, wobei der Analysatorschaltkreis (18) Teil der elektronischen Steuermittel (13) der Hauptsteuerungssystem (1) ist.

13. Stellglied nach Anspruch 10, **dadurch gekennzeichnet, dass** es Einrichtungen (22) umfasst, die Manöver der Steuerfläche (7) mit großer Amplitude erfassen und die dann Einrichtungen (21, 23) steuern, mit denen der Rückkopplungskreis (17, 19) zwischen dem Hauptsteuerungssystem (1) und dem Nebensteuerungssystem (2) in Abhängigkeit von der Übertragung (15) am Eingang abgekoppelt werden kann und die Nebensteuerleitung (2) in Abhängigkeit von der Übertragung (15) am Ausgang abgekoppelt werden kann.

## Claims

1. An actuator for a control surface (7), in particular for a primary flight control of an aircraft, the actuator including a main actuator (3) in a main control line (1) for actuating the control surface (7), the actuator comprising a motor of the vibration motor type, and being **characterized in that** it further comprises, in a compensation, secondary control line (2), a compensation actuator (4) and spring-forming means (5) interposed between the compensation actuator (4) and the control surface (7), said compensation actuator (4) tensioning or compressing the spring-forming means so as to make them suitable for delivering a mean force to the control surface (7) so as to off-load from the main actuator (3) the mean force that it needs to deliver to the flight control (7).

2. An actuator according to claim 1, **characterized in that** the actuator (4) of the compensation secondary line (2) comprises a second motor of the vibration motor type.

3. An actuator according to claim 1, **characterized in that** the compensation actuator (4) tensions or compresses the spring-forming means (5) when the main actuator is to supply a force having a non-zero mean value for a duration in excess of a threshold duration.

4. An actuator according to claim 3, **characterized in that** the threshold duration lies substantially in the range one second to twenty seconds.

5. An actuator according to claim 1, **characterized in that** the mechanical stiffness of the spring-forming means is selected in such a manner that the spring stroke needed for obtaining the maximum torque of the compensation actuator (4) is considerably greater than the stroke of the control surface (7).

6. An actuator according to any preceding claim, **characterized in that** the position of the compensation actuator (4) is blocked when it is exerting on the control surface (7) the mean force suitable for off-loading the main actuator of the main force it needs to deliver to the control surface (7), the main actuator (3) remaining in operational mode and then exerting on the control surface (7) only the forces required for fine maneuvering and stabilization of the aircraft.

7. An actuator according to claim 1, **characterized in that** the main control line includes electrical clutch-forming means (10) extending between the main actuator and the control surface, and enabling the control surface (7) to be decoupled from the main actuator (3) in the event of the main actuator malfunctioning.

8. An actuator according to claim 7, **characterized in that** the main line includes mechanical damper-forming means (11) extending in parallel with the electrical clutch-forming means.

9. An actuator according to claim 1, **characterized in that** the control signals for positioning the control surface (7) are determined by a flight control computer (12) and they are transmitted to the main and compensation actuators (3, 4) via electronic control means (13, 14).

10. An actuator according to claim 1, **characterized in that** the control signal for positioning the control surface (7) is transmitted to the main actuator (3), and a feedback loop (17, 19) extending between the main control line (1) and the secondary control line (2) enables the compensation actuator (4) to be controlled via lowpass filter-forming means (15) extending in the secondary line and electronic control means (14) interposed between the lowpass filter-forming means (15) and the compensation actuator (4).

11. An actuator according to claim 10, **characterized in that** the feedback loop (17, 19) extends between firstly a force sensor (16) interposed between the main actuator (3) and the control surface (7), and secondly the lowpass filter-forming means (15).

12. An actuator according to claim 10, **characterized in that** the feedback loop (17, 19) extends between firstly a circuit (18) for analyzing the control signals of the vibration motor of the main actuator (3), said control signals being representative of the torque delivered by the main actuator to the control surface (7), and secondly the lowpass filter-forming means (15), said analysis circuit extending from the electronic control means (13) of the main control line (1).

13. An actuator according to claim 10, **characterized in that** it includes means (22) for detecting large-amplitude maneuvers of the control surface (7) and then controlling means (21, 23) suitable for interrupting the feedback loop (17, 19) extending between the main control line (1) and the secondary control line (2) at the input to the transfer function (15) and suitable for interrupting the secondary control line (2) at the output from the transfer function (15).
